(19) Europäisches Patentamt
European Patent Office
Office européen des brevets

(11) **EP 3 812 701 B1**

(12) **EUROPEAN PATENT SPECIFICATION**

(45) Date of publication and mention of the grant of the patent:
**24.08.2022 Bulletin 2022/34**

(21) Application number: **19204967.4**

(22) Date of filing: **23.10.2019**

(51) International Patent Classification (IPC):
**G01C 15/00** $^{(2006.01)}$ **G01C 25/00** $^{(2006.01)}$

(52) Cooperative Patent Classification (CPC):
**G01C 15/002; G01C 25/005**

(54) **ONLINE LEVELING CALIBRATION OF A GEODETIC INSTRUMENT**

ONLINE-NIVELLIERUNGSKALIBRIERUNG EINES GEODÄTISCHEN INSTRUMENTS

ÉTALONNAGE DE NIVELLEMENT EN LIGNE D'UN INSTRUMENT GÉODÉSIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.04.2021 Bulletin 2021/17**

(73) Proprietor: **Hexagon Technology Center GmbH 9435 Heerbrugg (CH)**

(72) Inventors:
• **KOMPOSCH, Sybille Verena 6800 Feldkirch (AT)**
• **WENK, Markus 7000 Chur (CH)**
• **TÖNGI, Patrik Titus 9436 Balgach (CH)**
• **CELEBI, Ismail Roman 9016 St. Gallen (CH)**
• **AEBISCHER, Beat 9435 Heerbrugg (CH)**

(74) Representative: **Kaminski Harmann Patentanwälte AG Landstrasse 124 9490 Vaduz (LI)**

(56) References cited:
**EP-A1- 3 136 049**

**Description**

The invention relates to a geodetic surveying instrument according to the preamble of claim 1 and to a corresponding online calibration method of a surveying instrument according to claim 12.

In the technical field of surveying, in particular in the area of geodesy, construction work or industrial measurements, instruments for a contactless measurement by a movable optical measurement axis are used. By emitting optical radiation in a measurement direction towards a target point or target object to be measured, a spatial coordinate information of the target is derived. For example, an angular position and optionally also a distance - i.e. polar coordinates of the target object - can be derived and further processed, for example to derive Cartesian, Geodetic or Geospatial coordinate information. The measurement results are provided with respect to a reference frame, often with respect to a geospatial reference, comprising a level or plumb information.

The direction of the measurement, e.g. in form of a measurement light beam or a crosshair, is therein aimed at or pointed to the target, for example by pivoting or rotating the measurement axis around two substantially orthogonal movement axes. The measurement direction can therein be evaluated as an angular information, for example by one or more encoders, protractors or goniometers at the measurement instrument, by which an angular position value reading of rotated parts of the instrument can be determined. The movements around the rotary axes of the instrument can be operated manually, but are preferably motorized by an electrical drive unit.

In many embodiments, also a distance can be derived by an electro-optical distance measurement by an EDM, LIDAR, Interferometer, etc. with an emitted electromagnetic radiation which is at least partly reflected back from a target to the instrument, where it is received and converted into an electrical signal for distance determination. For example, emitted optical radiation can be used for electro-optical distance measurement using a Time-Of-Flight- (TOF), Phase-, Wave-Form-Digitizer- (WFD) or interferometric measurement principle or a combination of these principles, as described in EP 1 757 956, JP 4 843 128, EP 1 311 873, EP 1 450 128, EP 1 882 959, EP 1 043 602, WO 2006/063739 or others. Besides measuring naturally existing targets, special target markers or reflectors can be attached to the target object or mobile measuring rods or probes can be used as target object, etc.

For example, motorized Theodolites or Tachymeters (often also referred to as Total-Stations) are used for surveying with geodetic accuracy. A measurement target is therein aimed by an optical and/or electronic visual viewfinder and/or by some automatic target recognition and/or aiming system. The aiming is achieved by pivoting or rotating a portion of the instrument, which is comprising the viewfinder and the distance measurement unit, along two orthogonal axes with respect to an instrument base, that is e.g. stationed on a tripod or the like. An important criterion in those instruments is precision and accuracy of the measurements. In the field of land surveying, tachymeters or total stations with distance measurement accuracies of a few centimeters, millimeters or even less than one millimeter are used. The accuracy of angular measurements is usually within a range of less than two to ten angular seconds, preferably less than one or 0.5 angular seconds or less. Some embodiments of such instruments can e.g. be found in US 6,873,407, CN 201892533, US 2011/080477, EP 1 081 459, US 2012/127455, US 8,365,424, WO 2012/033892, WO 2007/079600, WO 2010/148525, or others.

As another example, 3D scanning is an effective technology to produce a point cloud of millions of spatial measuring points of objects within minutes or seconds. In principle, such scanners are designed to measure a distance to a measuring point by means of an electro-optical and laser-based range finder. A directional deflection unit is designed in such a way that the measuring beam of the rangefinder is deflected in at least two spatial directions, whereby a spatial measuring range can be recorded. The deflection unit is usually realized in the form of a moving mirror or other elements suitable for a controlled angular deflection of optical radiation, such as rotatable prisms, movable light guides, deformable optical components, etc. By a successive measurement of a multitude of points in distance and angle, i.e. in spherical coordinates (which can also be transformed into Cartesian coordinates for display and further processing), the point cloud is derived. An important aspect in those devices is the measurement speed of the gathering of the point cloud with a desired resolution and accuracy, usually in the range of some millimeters. Some embodiments of such Laser-Scanners can for example be found in DE 20 2006 005643 U1, US 2009/147319 or others.

Also Laser trackers are cognate instruments, mostly used e.g. in industrial surveying, like for coordinative position determination of points of a component of a vehicle or machine. Such laser trackers are designed for position determination of a target point with a substantially continuous tracking of a retro-reflective target point, like a retroreflective unit (e.g. cube prism) which is targeted and followed by an optical measuring beam of the instrument by changing the orientation of a motorized deflection unit and/or by pivoting a portion of the instrument. Examples of laser tracker instruments are described in US 2014/0226145, WO 2007/079600, US 5,973,788 or others.

In all those instruments, the measurement direction has to be derived precisely by angular measurement units like angular encoders at the movement axes of the instrument. Encoders providing such high accuracy, e.g. at or below one arc second are known e.g. from EP 0 440 833, WO 2011/064317, etc. and often comprise various error compensation-, self-calibration-, sub-resolution interpolation-features, etc.

The document EP 3 136 049 discloses a geodetic surveying instrument comprising a rotational position encoder and a tilt sensor, wherein the tilt sensor comprises an accelerometer that is arranged at a known position with a distance greater than zero from a rotational movement axis.

In order to establish an absolute and/or reproducible reference for the measurements, a horizontal or level plain, respectively a plumb-vertical is used. Such can be established by a mechanical leveling of the instrument itself during setup and/or by measuring a deviation from level and taking it into account numerically. Geodetic instruments are usually leveled, e.g. by a bubble level, a circular bubble, an oil pot sensor or another inclination sensor or by a combination of those. A MEMS accelerometer can theoretically also be used to determine a tilt of the instrument with respect to the earth gravitation field, but the required degree of accuracy of leveling for geodetic applications of the present invention - e.g. in a range of arc seconds or below - is therein higher than a simple MEMS accelerometer or IMU can provide off the shelf.

Inclination measurements with accelerometers in particular tend to suffer from instability and measurement errors, many of which are also dependent on environmental conditions and/or vary over time. In particular, the measurement values of accelerometers also tend to drift over time, often in an order of magnitude which is inacceptable for precise geodetic measurements. Besides a bias drift, also an instability of the scaling factors of the measurements, in particular the absolute or the relative scaling factors of multiple accelerometer axes, can reduce the accuracy. There are calibration approaches known to reduce those effects, like for example proposed in "High-Precision Calibration of a Three-Axis Accelerometer", Freescale Semiconductor, Application Note AN4399, 10/2015. But even such an exact factory calibration by a sensitivity-matrix and a bias in a rate table, which is derived from measurements in a plurality of different (preferably well known) static poses of the accelerometer in the gravity-field tends to be insufficient to reliably fulfill the requirements for a geodetic instrument. Typically, such a calibration requires a turning of the sensor about at least two axes. As practical example, US 9,194,698 mentions such a static, two axis compensation method in a surveying instrument that has an IMU or accelerometer in the telescope.

Another problem of the few available, highly accurate level-sensors such as e.g. oil pot sensors, is their limited measurement range. Therefore, a relatively exact physical leveling of the instrument (e.g. by a tribrach and a spirit level) is required at first hand to bring the actual level sensor into its working range. For precise applications, the tolerable setup-inclination is relatively low, wherefore the setup procedure can be burdensome and time consuming.

It is therefore an object of the present invention to improve a geodetic surveying instrument, in particular with respect to its leveling - respectively a method for deriving a leveling of a surveying instrument reference frame, in particular to provide geodetic measurements which are referenced to level or to a direction of gravity. Preferably, it is also an object to reduce the hardware in the instrument, which is required to provide a reliable reference with respect to level, in particular in view of size and/or effort, preferably in way that more mass production component can be utilized instead of highly specialized components for geodesy.

An object therein is to achieve a sufficiently precise leveling information by simple and low effort solution or to reduce size and effort in the implementation while substantially maintain accuracy and performance. Preferably, wherein the solution can also be automated and/or integrated in the hardware configuration and usage procedures of a regular state of the art instrument.

Preferably also requirements of the physical leveling at instrument setup should be reduced, e.g. allowing a tilted setup within a range that is larger than in prior art, whereby e.g. effort and time for the instrument setup can be reduced.

Those objects are achieved by realizing the features of the independent claims. Features which further develop the invention in an alternative or advantageous manner are described in the dependent patent claims.

The invention relates to a field calibration method and setup enabling an inclination measurement in a geodetic surveying instrument by a simple and small acceleration sensor, in particular a MEMS-accelerometer, which provides a sufficiently precise measurement result for such an application. In embodiments, the acceleration sensor can be an accelerometer with one, two or three sensitivity axes.

The present invention relates to a method for determining a calibrated leveling of a surveying instrument with an accelerometer, in particular of geodetic surveying instrument like a Theodolite or a Total-Station or a Laser-Scanner. The method comprises a, in particular dynamic, moving of the accelerometer around a rotation axis of the instrument, which accelerometer is arranged at a known position $\vec{r} \neq \mathbf{0}$ from the rotation axis, at least arranged in a known distance and preferably also arranged in a known orientation. While the moving, an acquiring of a movement profile or trajectory of the moving is done by a rotational position encoder for or at the rotation axis, and also a sensing of an acceleration due to dynamics of the moving by the accelerometer as accelerometer readings is done.

The rotation axis can therein be the vertical axis, alidade or Hz of the instrument. In particular, the rotation axis can therein be the same rotation axis, which is used as measurement axis when pointing the instrument to a measurement target, preferably wherein the rotational position encoder is therein a same rotational position encoder that is used in taking Hz-measurements by instrument.

Thereof, a deriving of at least one calibration parameter for the accelerometer readings is executed, based on the movement profile, the known position and the corresponding accelerometer readings, and a providing of a calibrated leveling to the surveying instrument is established by applying the calibration parameter to the accelerometer readings.

The providing of the calibrated leveling is therein in particular done during or immediately after the method for determining a calibrated leveling, and the calibrated leveling is thereafter considered fixed by the instrument, in particular until a re-executing of the method.

In an embodiment, the accelerometer is preferably a MEMS accelerometer, configured for sensing an acceleration value in a least one direction - in particular a two axes or preferably a three axes accelerometer - and the deriving of the at least one calibration parameter is done based on a model of the accelerometer, in particular of a model of the physical sensing characteristics of the accelerometer.

In an embodiment, the deriving of the at least one calibration parameter can be done by mathematical/statistical estimation, the least square method, a curve fitting method, or parameter optimization.

In an embodiment, the calibration parameter and/or the model can comprise a bias offset of the accelerometer readings.

In an embodiment, the calibration parameter and/or the model can comprise a sensitivity matrix of the accelerometer readings.

In some embodiments the calibration parameter can also comprise a time delay offset of the accelerometer readings with respect to the movement profile and/or the calibration parameter can comprise a noise term of the accelerometer readings.

The calibration parameters - in particular the bias offset, sensitivity matrix, time delay and/or noise term - are therein preferably comprised in the model of the accelerometer.

In an embodiment, the movement profile comprises at least one portion of constant rotational speed movement, based on which the at least one calibration parameter is derived, in particular with an evaluating of an, in particular substantially radial, centrifugal acceleration during this constant speed portion and deriving or estimating an accelerometer-bias as calibration parameter. For example, when the used accelerometer has (per design) stable scaling factors, a usage of only one portion of constant rotational speed can be a sufficient implementation according to the invention, in particular when the scaling factors are pre-calibrated in an extended factory-calibration or the like.

In an embodiment, the movement profile comprises at least one portion of constant rotational speed movements, based on which the at least one calibration parameter is derived, in particular with an evaluating of an, in particular substantially radial, centrifugal acceleration during those constant speed portions in the deriving of the at least one calibration parameter. In a preferred embodiment, the movement profile comprises at least two portions of rotational movements of different constant angular speeds. With at least one rotational speed, at least a bias is derivable according to the invention and with two or more different rotational speeds, in general also a scaling factor of the accelerometer is derivable according to the invention, e.g. in form of a scaling parameter or at least part of a scaling matrix for the accelerometer reading(s).

In an embodiment, the movement profile additionally or alternatively comprises at least one acceleration portion of the moving, based on which the at least one calibration parameter is derived, in particular with an evaluating of an, in particular substantially tangential, Euler-acceleration during this portion in the deriving of the at least one calibration parameter.

In a preferred embodiment of the invention, the moving can be done with a commanding of a desired movement profile to a motorized drive mechanism for rotating the rotational axis of the instrument. For example, the desired movement profile can comprise at least one, preferably at least two, portion(s) of different constant rotation speeds, during which the portions the at least one calibration parameter is derived. A portion of the movement profile can therein be considered having a duration of time that is configured long enough to derive a sufficient number of readings from the accelerometer and encoder in order to execute the calibration according to the invention, in particular to derive the required time derivatives like speed and/or acceleration with reasonable accuracy. For example, in embodiments, such a portion can have a duration in a range of about 100ms to some seconds.

The acquiring of the movement profile and the sensing of an acceleration can therein be synchronized in time, for example by a synchronized sampling and/or by timestamps, etc. The acquiring can therein comprise a sampling of a fast time series of values from the encoder and the accelerometer, which can be recorded and stored in a memory for further evaluation according to the invention, or which can at least partially also be evaluated on the fly, substantially in real-time.

In an embodiment, the deriving of the at least one calibration parameter based on the movement profile can comprise a deriving of an angular velocity as a time derivative of angular orientation values from the rotational position encoder, in particular with a calculating of a centrifugal acceleration at the position to be used as a known acceleration value in deriving the calibration parameter.

Additionally or alternatively, the deriving of the at least one calibration parameter based on the movement profile can comprise a deriving of an angular acceleration as a second time derivative of angular orientation values from the rotational position encoder, in particular with a calculating of a Euler acceleration at the position to be used as a known acceleration value in the calibration parameter.

In other words, the present invention can provide a field calibration to derive an actual inclination of a surveying instrument by a MEMS accelerometer with improved accuracy. Therein, the accelerometer is arranged in the instrument at a defined position from a rotation axis of the instrument, for example from the vertical rotation axis of the instrument. Preferably, also an orientation of the accelerometer 9 is defined. The accelerometer is rotating around the rotation axis, preferably with at least two different speeds of rotation, and during the rotating, a precise angular orientation of the rotation axis is derived by a rotational encoder of the axis and acceleration values are derived by the accelerometer, preferably in three dimensions. From the precise angular orientation values from the encoder, an angular speed or rotation rate and/or an angular acceleration of the rotating of the axis is derived. By a numerical evaluation of the derived angular values and the corresponding acceleration values, calibration values are derived. Thereby the calibration parameters, in particular a scale factor and/or a bias offset of the acceleration measurements, are determined or mathematically estimated under the actual conditions of those measurements, whereby an actual inclination of the instrument can be derived from the acceleration values with improved accuracy compared to a static measurement and/or calibration approach. Preferably such is done during initialization-movements of the instrument, but it can optionally also be done during working movements during the regular usage of the instrument and/or calibrating movements in idle state of the instrument.

The instrument can in particular comprise at least one, preferably two, movement axis, which is motorized for providing a controlled positioning of a measurement direction or measurement axis of the geodetic surveying instrument. An instruments rotational position encoder at the movement axis is therein configured to derive the measurement direction, as a measurement value of the geodetic surveying instrument that can be provided as a measurement coordinate of a measured point or target object. The measurement axis is therein preferably embodied as a laser-axis of an opto-electric distance meter, EDM or LIDAR, optionally combined with an optical or electronic visual aiming device such as a telescope or a camera. In an example of an embodiment, the instrument can comprise a laser distance meter, which's laser beam forms at target axis that is pointed to a desired measurement direction by two preferably orthogonal movement axis which are configured to move the laser distance meter or to deflect the laser target axis. Optionally, there can also be a camera with an optical axis that at least substantially coincides with the measurement direction. The rotational encoder can therein be embodied as a high accuracy rotational encoder configured with a high positional accuracy and with an evaluation unit of the bare encoder readings which provides a calibration, error compensation and/or interpolation of its angular measurement values which are used to derive the measurement direction as results of the surveying of a target point.

The present invention also relates to a geodetic surveying instrument, which is configured to direct a measurement light beam into a desired measurement direction in space, like e.g. a Theodolite, Total-Station or Laser-Scanner. In other embodiments, the instrument can also be Laser tracker, a Rotating Laser, a building theodolite or construction Layout-Tool. The instrument therein comprises at least one rotational movement axis, configured for providing a positioning of the measurement direction of the geodetic surveying instrument. For example, the rotational movement axis can be a substantially vertical HZ-axis of the instrument, in particular in a theodolite-like device. In particular, the instrument comprises a motorized drive mechanism for rotating the rotational movement axis, which drive mechanism is preferably configured to be commanded to follow a desired calibration trajectory, for example comprising a speed- and/or position control loop for an electrical motor that is driving the axis. The instrument also comprises a rotational position encoder at the movement axis, which is configured for deriving the measurement direction as a measurement value of the geodetic surveying instrument, and also a tilt sensor for deriving a leveling (or plumb-reference) for the measurement value. According to the invention, the tilt sensor comprises an accelerometer, in particular a MEMS-accelerometer, that is arranged at a known position $\vec{r} \neq 0$ from the movement axis. According to the invention, a calibration unit of the instrument is configured to derive calibration parameters for the accelerometer during a dynamical rotation of the accelerometer around the movement axis along a trajectory and to provide thereby calibrated accelerometer readings as the calibrated leveling or plumb-reference.

In particular, a calibrated accelerometer value is derived thereof, whereof an inclination of the rotational axis with respect to level or vertical plumb-direction is derived. The calibration unit is in particular configured to derive the calibration parameters according to a method described herein. For example, the calibration unit is in particular configured for a sampling of rotational direction values of the movement axis from the rotational position encoder and corresponding accelerometer reading values from the accelerometer as dynamic data, wherein this sampling is done while the movement axis is moving at a speed unequal zero, and the calibration unit is configured for deriving calibration parameters for the accelerometer reading values based on the dynamic data according to a dynamic model of the accelerometer arrangement.

In other words, the present invention can relate to an embodiment of a geodetic surveying instrument, comprising at least one rotational axis by which a first instrument portion is movable with respect to a second instrument portion, to point a measurement direction of the instrument to a target object, with an angular encoder at the rotational axis, which is configured for deriving an angular orientation value of the rotational axis, and a level-sensor for deriving a plumb reference for the rotational axis. According to the invention level sensor can comprise an accelerometer sensor for sensing an acceleration value, in particular a MEMS accelerometer, which is arranged in a position or distance greater zero form the rotational axis, and a calibration unit, in particular a computation unit, configured to derive acceleration values and angular orientation values during a rotating of the rotational axis along a trajectory and to calculate calibration parameters for the accelerometers on basis of the derived acceleration and angular orientation values and the position, in particular with an evaluation of a radial centrifugal acceleration during the rotating.

The acceleration is therein derived in at least a substantial radial direction of the rotation (especially measuring a centrifugal acceleration) and can preferably also be derived in a substantially tangential direction of the rotation (especially measuring a Euler acceleration) and/or in a substantially axial direction of the axis of the rotation (especially measuring gravity), in particular wherein the axial direction substantially coincides with the direction of gravity. In a preferred embodiment, the sensitivity axes of the accelerometer substantially coincide with those directions, but in other embodiments according to the invention where a three dimensional linear accelerometer is used, its axes can also be in random orientation with respect to the rotational axis for the calibration according to the present invention. In embodiments, the accelerometer orientation is comprised in the sensitivity matrix, either as a parameter being fixed (e.g. factory calibrated or known) and/or derived according to the present invention.

The calibration parameter can therein comprise at least a bias offset for the accelerometer values and in particular also a scaling factor for the accelerometer values, in particular a scaling factor in form of at least part of a sensitivity matrix.

In an embodiment the calibration unit can for example be configured to derive an angular velocity as a time derivative of the measurement direction values from the instruments rotational encoder, whereof a centrifugal acceleration at the known position of the accelerometer can be calculated as a known acceleration value for the calibrating of the accelerometer when latter is rotating with the angular velocity. Additionally or alternatively, the calibration unit can be configured to derive an angular acceleration of the rotating as a second time derivative of the measurement direction values from the instruments encoder, whereof a Euler acceleration at the known position can be calculated as a known acceleration value for the calibrating of the accelerometer when rotating with the angular acceleration.

The trajectory of the rotating can therein be commanded by the calibration unit and configured to comprise at least one constant rotation speed phase, during which the accelerometer measurement values and the angular orientation values are derived for the calibration. Preferably, the trajectory can comprise a first constant rotation speed phase at a first rotation speed and at least a second constant rotation speed phase at a different, second rotation speed, at rotation speeds centrifugal accelerations are derived by calculation for the calibrating by the accelerometer. In an embodiment, the trajectory can also be configured to comprise at least one rotational acceleration phase, during which a tangential Euler-acceleration is derived by calculation for the calibrating by the accelerometer.

An embodiment of the invention also relates to an according system providing the method, e.g. embodied as a computation unit. Such a device or system according to the present invention can comprises microcontrollers, microcomputers, DSPs or a programmable or hardwired digital logics, etc., wherefore the present invention can involve or be embodied as a computer program product with program code being stored on a machine readable medium or embodied as an electromagnetic wave (such as e.g. a wired or wireless data signal to be provided to the instrument, or a program stored at a remote (cloud-) computation unit linked to the instrument), which implements functionality according to the invention at least partially in software - which therefore is also an embodiment of the invention.

Devices, methods, systems, setups and computer programs according to the invention are described or explained in more detail below, purely by way of example, with reference to working examples shown schematically in the drawing. Specifically,

Fig. 1a shows an example of a first embodiment of a surveying instrument according to the present invention;

Fig. 1b shows an example of a second embodiment of a surveying instrument according to the present invention;

Fig. 2 shows an example of a setup of an embodiment according to the invention in a surveying instrument;

Fig. 3 illustrates the principles in example of a setup and/or method according to the invention;

Fig. 4 shows an example of forces in an embodiment according to the invention;

Fig. 5 shows an example of a block diagram of an embodiment of a calibration according to the invention;

Fig. 6 shows an example of movement diagrams of an embodiment according to the invention;

Fig. 7 shows an example of acceleration diagrams of an embodiment according to the invention;

Fig. 8 shows an example of a flow diagram of an embodiment according to the invention.

The diagrams of the figures should not be considered as being drawn to scale. Where appropriate, the same reference signs are used for the same features or for features with similar functionalities. Different indices to reference signs are used to differentiate between different embodiments of a feature which are exemplary shown. The terms "substantially" is used to express that a feature can, but in general is not required to be realized exactly up to 100%, but only in such a way that a similar or equal technical effect can be achieved. In particular slight deviation, due to technology, manufacturing, constructional considerations, etc. can occur, while still within the meaning of the scope.

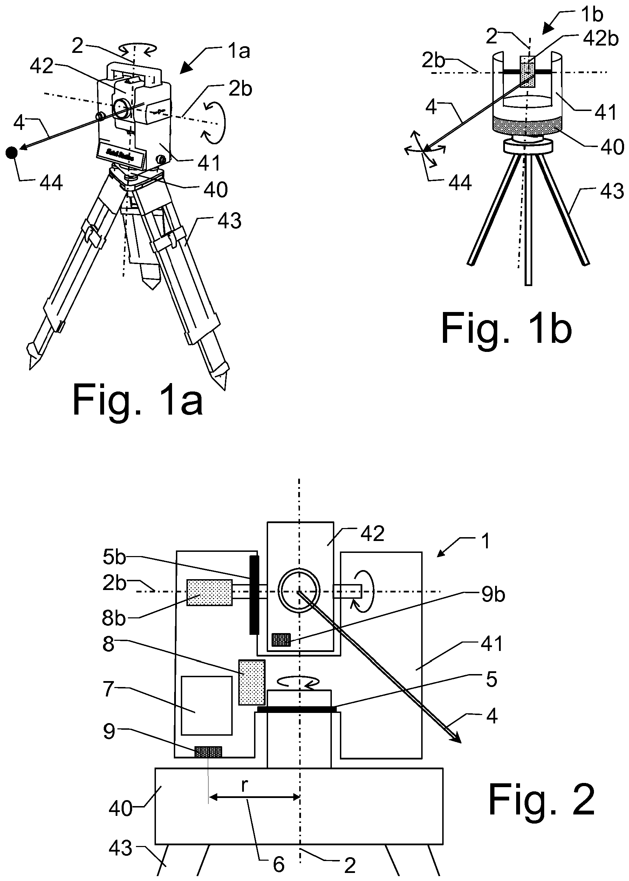

**Fig. 1a** shows an example of an embodiment of a geodetic surveying instrument 1 configured as a theodolite or total station 1a. In the shown example, the instrument 1 is stationed with its instrument base 40 on a tripod 43. It comprises a horizontal movement axis 2 around which an upper portion (or turret) 41 of the instrument can be moved with respect to the instrument base 40. The upper part comprises a vertical movement axis 2b around which a telescope and/or distance measurement unit 42 can be moved. By this arrangement, a measurement light beam of the distance measurement unit can be aimed to a desired target point 44 in a measurement direction 4. The Instrument therein comprises a rotational instrument encoder at each of the movement axes 2,2b to derive a measurement value of an orientation of the measurement direction 4 with respect to the base 40, as well as a value of a distance information from the instrument 1 to the target point 44, whereby 3D spatial coordinates of the target point 44 can be derived and provided by the surveying instrument 1 as a measurement value. Those rotational encoders provide angular measurement values of the orientation of the measurement direction 4, respectively the instruments movement axes 2,2b in a high resolution, e.g. in the range arc seconds or below. Such requires rather sophisticated rotational encoders, with advanced measurement evaluation units, which can e.g. also comprise error compensations for eccentricity, temperature drifts, encoder code errors, misalignment of encoder sensors, etc. The encoders - respectively their readout unit - can therein require some initial movement as a calibration move or movement sequence to derive or check calibration values for their angular measurements to fully achieve their specified accuracy. The movement axis 2 and 2b of the instrument 1 are therein preferably motorized for providing a precise spatial positioning of the measurement direction 4 in space, which can also be remote controlled and/or automated.

**Fig. 1b** shows another example of an embodiment of a geodetic surveying instrument 1 configured as a Laser scanner 1b. As a laser scanner 1b is configured to derive a point cloud with many 3D measurement points 44, it is designed to provide a fast movement of the measurement direction 4 in space during the scanning for a fast successive measurement of many target points 44 in a defined spatial region or in a substantially full-dome range. Such can be achieved by not moving the whole distance measurement unit 42 in at least one of the movement axes 2b, but to move a less inert deflection element 42b, such as a deflection mirror for the measurement light. The movement axes 2 and 2b of the instrument 1b are therein motorized to provide a precise spatial positioning of the measurement direction 4 in space and a smooth constant scanning speed. The present invention is therein preferably applied to the slow axis 2, which is moving the top-portion 41 with respect to the instrument base 40 and stationing-unit 43.

Another, here not shown embodiment of a geodetic instrument according to the invention would be a Laser-Tracker as known in the art or a rotating laser, a Layout-Tool or a building/construction theodolite.

Summarized, such a geodetic surveying instrument 1 in terms of the present invention can e.g. be configured with at least one, preferably two, movement axes, in particular with a vertical axis 2 and a substantially orthogonal horizontal axis 2b (or trunnion axis), which axes 2,2b are configured to aim a target axis 4 to a measurement target 44, for example as illustrated in **Fig. 2.**

The target axis 4 can e.g. be configured with an optoelectronic distance meter and/or a (optical and/or electronic) telescope. For example, a laser distance meter preferably arranged substantially coaxially with a line of sight of a visual aiming unit, as symbolized by the upper portion 42. The movement axes 2, 2b are each configured with a rotational encoder 5, 5b to measure an actual orientation of the movement with geodetic accuracy, e.g. with an angular resolution some arc-seconds or preferably below. By the instruments rotational position encoders 5,5b and the distance meter, polar coordinates of a measurement target 44 can be derived. The standing axis 2 - as a first of the movement axis 2a, 2b - is configured to rotate the turret 41 with respect to a base 40, by which base 40 the instrument 1 can be stationed e.g. substantially horizontal on a tripod 43. The tilting axis 2b - as a second of the movement axis 2, 2b - is comprised in the turret structure 41 and rotates the aiming unit 42 with the distance measuring target axis 4. The movement axes 2,2b are driven by an electrical motor drive 8,8b, or in some embodiments optionally also by hand.

For most measurements by a geodetic instrument 1, a reference of the measurement values with respect to level or plumb line is required. Such can be established by a precise mechanical leveling of the instrument 1 during setup and/or by a measurement and numerical consideration of possible inclinations with respect to level. As high-accuracy inclination measurements sensors (like oil pot sensors, etc.) tend to have a comparably small measurement range in which precise measurements can be established, it is a common approach to combine a mechanical leveling of the instrument base 40 at setup, followed by a measurement of residual inclination errors by a level sensor -for mechanical fine-leveling and/or for numerical compensation of the measurement results.

To achieve the required leveling accuracies for surveying instruments according to the invention in the field, most regular MEMS accelerometers on their own are of too low accuracy and/or measurement stability. In particular, there are drifts, bias- and scaling errors, in the measurement values of the accelerometers. Those errors also vary over time and dependent on environmental conditions (such as temperature, humidity, air pressure, etc.). Even with the vendor-proposed calibration approaches, those problems cannot be sufficiently overcome to guarantee the required accuracy. A known practice of measuring multiple stationary acceleration values in multiple stationary orientations of the accelerometer sensor and deriving calibration parameters thereof, may not be satisfactory or can require that the static orientations are exactly derived by an external positioning unit for the instrument 1 or from the axis encoders 5. Multiple exact positioning of the instrument in defined orientations and holding it still there for taking a series of static measurements is time consuming and often also not well suited to be conjoint with functions of the instrument. Furthermore, a movement of the accelerometer in at least two axes is needed in order to sufficiently calibrate a Sensitivity-Matrix and Bias of the accelerometer.

According to the present invention, an accelerometer 9 is located in a rotating portion 41 of the instrument 1 at a known - preferably at a defined and/or at a fixed - distance r or position 6 from the rotation axis 2, which position 6 is not substantially zero. Preferably, also an orientation of the accelerometer 9 with respect to the rotating portion 41 is known, in particular defined and/or fixed.

An evaluation unit 7 which is configured to derive a calibration and/or a leveling value according to the invention, is configured and arranged to derive acceleration value readings for the accelerometer 9 and also angular value readings from the encoder 5 and configured to provide at least a tilt value of the instrument 1 to measurement unit which is processing and providing the spatial measurement results of the instrument 1 for storage and/or further usage. The evaluation unit 7 is preferably located at or in the instrument 1, but can in another embodiment also be provided remote from the instrument 1 with a wired or wireless data link to the instrument 1, e.g. at a remote instrument controller or at a cloud or fog computation system. The evaluation unit 7 comprises computational electronics - such as a microprocessor, microcontroller, digital signal processor, programmable and/or hardcoded circuits and logics, etc.

Optionally or additionally, there can also be an accelerometer 9b at the instrument portion 42 in a position $\vec{r} \neq$ **0** from the rotation axis, whereby e.g. the calibration according to the invention can be applied to this axis 2b, the position r can be adaptable by axis 2b (in temporarily static or dynamic way during calibration), combined movement trajectories of both axes 2, 2b can be driven during calibration, whereby in particular further calibration parameters for the instrument 1 and/or to get redundant and error compensated measurement values for the calibration can be derived.

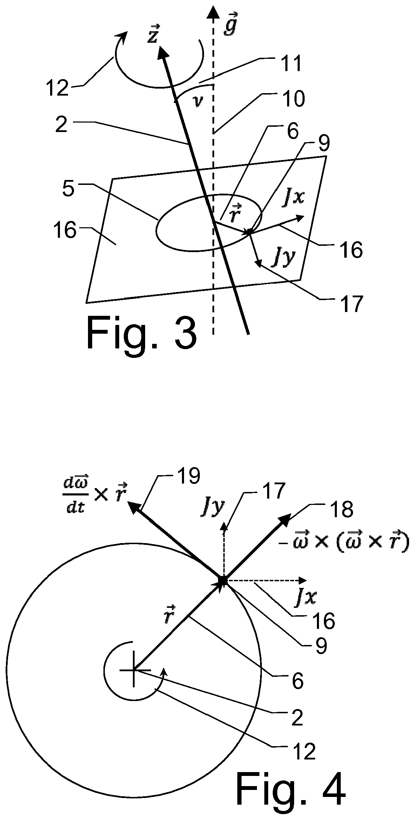

**Fig. 3** illustrates a schematic sketch of an embodiment of a geodetic terrestrial measurement instrument 1 according to the invention, in particular with respect to the instrument's setup of the rotational axis 2, angular encoder 5 and accelerometer 9 according to the invention, and to explain their functionalities according to the invention.

In this basic structure, an acceleration measurement sensor 9 - e.g. a MEMS accelerometer - is arranged to be turned 12 around one of the rotational axis $\vec{z}$ 2 of the instrument 1 and an angle of rotation 12 around this axis $\vec{z}$ 2 is precisely measured by an angle encoder 5.

The acceleration sensor or accelerometer 9 is a device that measures proper acceleration. Proper acceleration, being the acceleration (or rate of change of velocity) of a body in its own instantaneous rest frame, is not necessarily the same as coordinate acceleration, being the acceleration in a fixed coordinate system. Conceptually, the acceleration sensing element 9 can e.g. behave as a damped mass on a spring, as most of the commercially available accelerometers 9 do. The accelerometer is therein preferably embodied as a Microelectromechanical system (MEMS) device, which for example, can substantially comprise a cantilever beam with a proof mass, which is also known as seismic mass, and some measurement arrangement to derive a deflection of the mass or cantilever, e.g. a piezo, resistive, capacitive or optical sensor. In some embodiments, besides a direct measurement of a deflection value, also a compensation measurement approach can be used. But in other embodiments, also accelerometers based on other principles can be used, e.g. thermal accelerometers or others.

The accelerometer 9 has therein a known or defined, preferably fixed, position 6 at $\vec{r} \neq$ **0** from the center of the rotation axis $\vec{z}$ 2 to the accelerometer 9. As it can be seen in the Figure, the rotation axis $\vec{z}$ 2 of the instrument 1 is misaligned with respect to the direction of gravity $\vec{g}$ 10 by a deviation v 11, which is also referred to as tilt of the instrument 1. The example shows an accelerometer 9 with two measurement axes $J_x$ 16 and $J_y$ 17, but the present invention can also have an accelerometer with three axes as a preferred embodiment. Theoretically, the basics of the present invention can also be worked with a single axis accelerometer, but calibration and resulting measurement accuracy can be expected to be higher by using a three axis sensor 9. The actual physical orientations of the axes 16,17 of the accelerometer 9 in the instrument 1 are preferably known and/or at least partially pre-calibrated, but are in general not highly critical, as the calibration according to the invention can also take care of those, e.g. as the orientations can be considered to be comprised in a three dimensional Sensitivity-Matrix. When the orientation if the accelerometer is considered to be fixed and stable after manufacturing of the instrument, this aspect of the Sensitivity Matrix can be factory calibrated and stored, and only the other aspects of the matrix can be calibrated in the field according to the invention. In a preferable embodiment, an orientation of the accelerometer 9 can be at least substantially aligned orthogonal to the movement axis 2,2b and/or the reference frame of instrument 1, e.g. with one accelerometer sensitivity axis in radial direction. In the embodiment shown in the example, the angular encoder 5 and the rotation 12 of the accelerometer 9 are substantially in the same plane 14, which is not strictly mandatory. The rotation 12 is done with an angular rate or velocity $\omega_z$, which can be derived from the angle encoder 1 readings $\varphi$ by $\omega_z = \dfrac{d\varphi}{dt}$, as well as an angular acceleration $\alpha_z = \dfrac{d^2\varphi}{dt^2}$. To derive angular speed and/or angular acceleration from encoder position readings, filtering and/or smoothing algorithms can be applied. In a special embodiment, also an additional gyroscope can be used in combination with the encoder to derive and/or smooth the angular speed and/or acceleration values by a combination of encoder and gyro data.

**Fig. 4** illustrates some of the dominant forces which can result during a rotational movement 12 of the accelerometer 9 as shown before. In addition to the always present acceleration g due to gravity, there are accelerations due to the rotation that are also sensed by the accelerometer 9. The centrifugal acceleration 18 is therein dependent on the angular speed of the rotation movement and the Euler acceleration 19 is dependent on the angular acceleration. The gravitational acceleration g can in many embodiments be substantially perpendicular to the paper plane, respectively substantially in about the same direction as the rotation axis, which is regularly the case in surveying instruments configured with a vertical axis but not strictly mandatory for working the present invention.

The centrifugal acceleration 18 can be expressed vectorially by $-\vec{\omega} \times (\vec{\omega} \times \vec{r})$. The Euler acceleration 19 can be expressed vectorially by $\dfrac{d\vec{\omega}}{dt} \times \vec{r}$. In order to derive an actual inclination value v of the instrument 1 (respectively of the rotation axis 2 relative to gravity direction g), those additional accelerations - as present during a movement - have to be counted away from the measurements.

For the calibration, the accelerometer 9 is modeled. In the here explained example, a linear modeling will be discussed in view of understandability and simplicity. Such a linear modeling can also be sufficient for many embodiments, but the present invention can also be worked with a modeling of higher order, in particular in embodiments where increased accuracy is required and/or when specific (non-linear) sensor-peculiarities of the used accelerometer need to be addressed. Such a linear modeling can in particular be embodied to comprise a bias b for each axis and a sensitivity matrix S.

In an example of an embodiment, the accelerations sensed by a 3 axis acceleration sensor 9 can be expressed in a linear model by:

$$f_m = Sf^T + b + \eta, \qquad f^T = S^{-1}(f_m - b - \eta) \qquad \text{(convention 1)},$$

with:

$f_m$    accelerometer measurement (3x1 vector for 3 axis)
$f^T$    true acceleration (specific force), w.r.t. turret frame
$S$    sensitivity matrix (3x3 matrix)
$b$    sensor bias (3x1 vector)
$\eta$    sensor noise (3x1 vector).

In order to avoid the inversion of S, (e.g. to reduce calculation effort) this can alternatively be expressed as:

$$f_m = S^{-1}(f^T - b + \eta), \qquad f^T = Sf_m + b - \eta \qquad \text{(convention 2)}.$$

The kinematic considerations at a rotating accelerometer 9 can e.g. be expressed as:

$$f^T = -\omega^2 \begin{bmatrix} r^{T1} \\ r^{T2} \\ 0 \end{bmatrix} - \dot{\omega} \begin{bmatrix} -r^{T2} \\ r^{T1} \\ 0 \end{bmatrix} + g \underbrace{\begin{bmatrix} -\bar{v}_Q \cos Hz + \bar{v}_L \sin Hz \\ -\bar{v}_Q \sin Hz - \bar{v}_L \cos Hz \\ \sqrt{1 - \bar{v}_Q^2 - \bar{v}_L^2} \end{bmatrix}}_{e_{G3}^T(Hz, \bar{v}_Q, \bar{v}_L)},$$

with:

$f^T$      Specific force (acceleration) w.r.t. turret frame

$\omega$      Angular velocity about Hz axis (scalar)

$r^T$      Sensor position w.r.t. the turret frame, $r^T = [r^{T1}, r^{T2}, r^{T3}]$

$g$      Gravity of Earth (scalar)

$Hz$      angle of rotation from encoder (Horizontal angle)

$\bar{v}_Q, \bar{v}_L$      Inclination w.r.t. standing base frame $\Sigma_S$

$v_Q, v_L$      Inclination w.r.t. turret frame $\Sigma_T$.

The dynamic or kinematic of a rotating accelerometer 9 can e.g. be described as in the formula above. This formula can also be expressed using vector- and cross-product notations, e.g. in line with Fig. 4 - which is here omitted in view of readability, but can be advantageous in some embodiments or to implement more a generic software modules or to implement and/or use software libraries or the like. The therein required angular velocity value $\omega$ as well as an angular acceleration value $\alpha$ can be derived from the angular readings of the instruments encoder 5. For example, a time derivative of the angle readings $\varphi$ as $\omega_z = \dfrac{d\varphi}{dt}$ and $\alpha_z = \dfrac{d^2\varphi}{dt^2}$ can be established, preferably combined with some filtering, smoothing calculations or enhanced algorithm for doing so to avoid noise and spikes in the derivative signal, which can e.g. comprise modeling of the mechanical system and its dynamics.

The rotation 12 in the majority of embodiments according to the present invention, the moving is provided by a drive unit for the axis 2 of the instrument 1. Such a drive unit can in particular be configured to provide a rotation 12 at a substantially constant speed $\omega$, at least during certain phases of the movement, and optionally also to have defined or at least limited acceleration and/or jerk values of the movement. In some embodiments the speed and/or acceleration can also be at least partially used or derived conjoint by the calibration and the drive unit. The rotation can e.g. be provided in form of a specified movement trajectory for the instrument axis 2, preferably wherein the movement trajectory is specifically configured to result a movement that comprises movement subsections which are advantageous to derive a robust calculation of the calibration according to the invention. For example, a movement trajectory with at least two sections of different constant rotation speeds can be advantageous for calculating the calibration data and deriving the tilt of the instrument 1, preferably wherein the rotation speeds $\omega$ and the position 6 r are configured to result in acceleration values that are within a valid sensitivity range of the accelerometer and represent statistically significant results. In embodiment with an accelerometer having stable sensitivity characteristics, a bias of the accelerometer can also be calibrated according to the invention with at least one constant rotation speed.

In an embodiment the exact position r of the acceleration sensor 9 can be calibrated in a factory-calibration of the instrument and then stored and considered to be substantially stable. In advanced embodiments, the position r can e.g. also be considered to depend on environmental conditions such as temperature, etc. In special embodiments, where the accelerometer 9 is not permanently fixed with respect to the axis 2, but e.g. temporarily or dynamically movable by a second axis 2b or the like (e.g. with an accelerometer in the telescope-unit 42 of an instrument like in Fig. 1a or 2), the position r can be dependent on other values like the second axis 2b encoder 5b readings, but anyway, preferably the position 6 is considered to be known (at least instantaneous) for an embodiment of the calibration according to the invention. But in contrast to static accelerometer calibration approaches in several static orientations, a second axis 2b and/or a variation of the position 6 is not mandatory for the calibration according to the present invention and in some instances not even advantageous. In special embodiments, the position $\bar{r}$ or distance r can in principle even be derived or refined in the calibration routine, e.g. with a least squares method or an estimator, but such is not always favorable, e.g. in view of robustness of the approach.

The calibration according to the invention derives the whole sensitivity matrix S or at least a subset (like e.g. at least the diagonal elements) thereof as calibration parameters. For example, an estimator-, adjustment calculus or the like can be applied to the model discussed above. It also derives a bias of the accelerometer readings as calibration parameters.

In case of a field calibration of a subset of the parameters only, the remaining calibration parameters and/or parameters on which the calibration bases, can be stored and recalled, e.g. from factory calibration or by special extended calibration procedure. Such a special extended calibration procedure can e.g. require extended time, exact physical leveling of the instrument 1, defined external references and/or other specific parameters, and is not designed to be executed at each startup of the instrument 1 or during regular usage of the instrument 1, but can also comprise principles of the presently claimed invention.

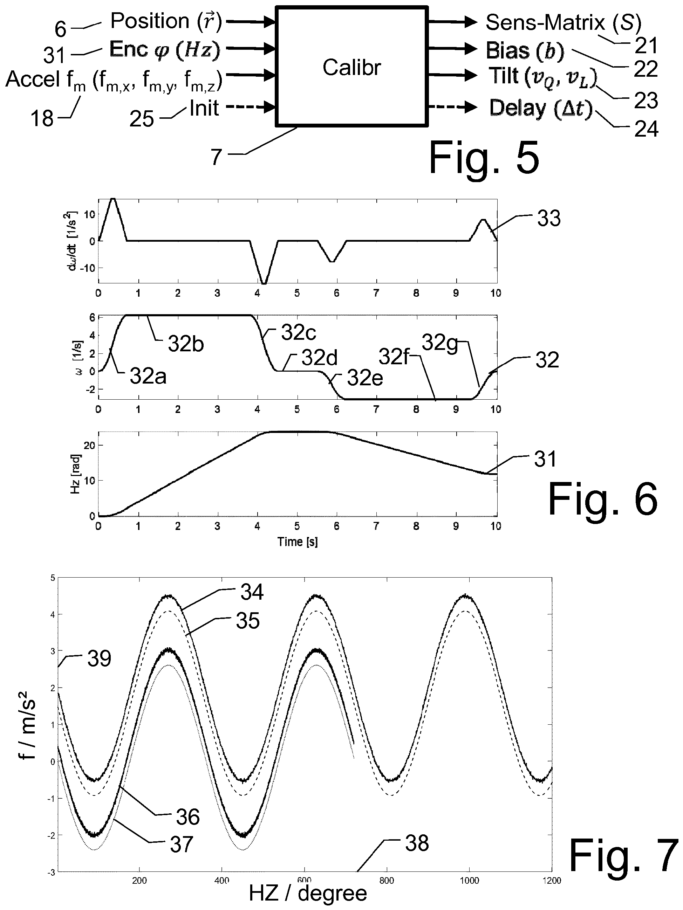

**Fig. 5** shows an Input- Output- diagram of an embodiment of a calibration unit 7 according to the invention. It takes inputs in form of the encoder readings 31 *Enc* $\varphi$ (Hz) of an encoder 5 at the instruments rotational axis 2, which axis also moves the measurement direction 4 of the instrument 1 and which encoder 5 also derives the angle of the measurement direction 4 for the spatial measurement results of the instrument 1. It also takes inputs in form of accelerometer readings 18 Accel $f_m$ ($f_{m,x}$, $f_{m,y}$, $f_{m,z}$) from an acceleration sensing element 9 which is located at a position 6 $\vec{r}$, a distance $r = \|\vec{r}\|$ from the rotational axis 2. The calibration unit 7 has preferably also knowledge of the position $\vec{r}$ of the sensor, preferably given as a fixed stored value or optionally derived and/or refined. Besides, the calibration unit 7 can also take other initialization values 25 *Init* as input, e.g. at least part of the calibration values that can be considered fixed or which can provide starting values for the deriving of the calibration parameters, (e.g. derived theoretically, in a factory calibration or from former executions of the calibration according to the invention).

Preferably, the readings of the accelerometer 9 and of the encoder 5 are substantially synchronized in time or have a known or defined timing with respect to one another. Optionally and if given, a time delay between the readings of the accelerometer 9 and of the encoder 5 can also be derived in the calibration according to the invention and considered in the calculations of the calibration parameters.

In an embodiment, there can be a trigger signal for synchronizing the readout of the encoder 5 and the accelerometer 9 or there can be a (preferably global) timestamp clock for the readout of the accelerometer 9 and the encoder 5. In embodiments, where the accelerometer readout 18 cannot be triggered precisely, it can be read out periodically and a synchronization to an encoder reading 31 can be established by time stamping, wherein a residual jitter in the readout can remain. In particular, in a well-designed implementation of the present invention where primarily well-defined constant speed movement phases are evaluated, influences of such a jitter can be designed to be negligible. In embodiments where acceleration phases of the movement or dynamic movement profiles are evaluated for the calibration according to the invention, a synchronized, triggered or precisely time-stamped readout of accelerometer and encoder can be more pressing to achieve decent signal quality for a precise calibration.

In an embodiment with a latency between the encoder and the accelerometer readings, this latency can also be estimated and considered in the deriving of the calibration parameters and/or of the tilt of the instrument as part of the deriving of the calibration parameters according to the invention.

The calibration unit 7 thereof derives calibration parameters for the accelerometer readings, respectively thereby calibrated accelerometer readings as calibrated leveling- or tilt-information 23 *Tilt* ($\bar{v}_Q, \bar{v}_L$) of the instrument 1. In this example, the calibration parameters are illustrative shown as a sensitivity matrix 21 *Sens-Matrix* (S) for the measurement axes of the accelerometer 9 and as a bias value 22 *Bias* (b) for each of the measurement axes of the accelerometer 9. In other embodiments maybe other and/or additional parameters can be derived, in particular in view of a modeling of the accelerometer 9. For example, here shown is a time-delay parameter 24 Delay ($\Delta t$), which reflects timing differences between the readings of the accelerometer 9 and of the encoder 5.

The calibration unit 7 is configured to work on input data readings which are derived during calibration routine according to the invention in which the axis 2 of the instrument moves, which means that the accelerometer 9 is in movement with respect to the inertial frame, in an embodiment preferably in pure rotational movement around the instrument axis 2.

The rotation-speed or angular rate $\omega$ of the accelerometer 9 can therein be derived from the angular readings $\varphi$ of the axis-encoder 5 over time. In most embodiments, the angular rate $\omega$ is set to a desired value or trajectory for or by the calibration routine by configuring a drive unit of the axis 2 to a desired trajectory of movement. The calibration is therein specifically executed with a variation of the rotational speed of the instrument during the calibration routine, in a dynamic state during the rotation. In an embodiment, e.g. a first speed of rotation is used and at least a second speed of rotation is used, and the calibration parameters are calculated, e.g. in view of above formulated calculations. For example, a non-linear least square approximation or another mathematical approach can be applied to the (overdetermined) system of equations (e.g. above mentioned convention 1 or 2) on basis of the data from the accelerometer and encoder during the rotation in order to resolve the unknown parameters as e.g. $\bar{v}_Q, \bar{v}_L$, b and/or S (or part of S).

For the surveying-measurements to derive spatial information of target objects 44, which are taken by the instrument 1, an inclination or tilt 11 of the instrument 1, in particular of its rotation axis 2 is derived according to the invention based on the calibration or preferably during the calibration itself. The tilt 11 of the instrument 1 is preferably derived during or at least right after the calibration and then considered to be fixed until a further execution of the calibration, as the accelerometer is at risk to drift off the calibration parameters over time and therefor the calibration might not be guaranteed to be sufficiently accurate for later on usages. Yet, the calibration according to the invention can be re-executed from time to time or on demand in the field, e.g. in measurement pauses or even during regular instrument movement during the measurement which fulfill or are adapted to have a trajectory that is usable for deriving calibration results, e.g. movements with defined, different constant speeds over a reasonably large angular sector. Such a non-continuous tilt measurement can also help to save energy.

For example, the tilt 11 of the instrument 1 is derived according to the invention when setting up the instrument 1 in the field. In initial movement of the instrument 1 along a defined trajectory, the accelerometer- or tilt- calibration according to the invention can be executed, e.g. similar to or combined with the movement that is already implemented in many instruments, e.g. for a calibration of the encoders and/or for other system check-ups, also referred to as initializing "dance" of the instrument. According to the invention, such an anyway given initialization movement of the instrument can be configured to be used to derive at least a bias and sensitivity calibration of the accelerometer and deriving an accurate instrument tilt 11 by a simple MEMS accelerometer.

**Fig. 6** shows an example of a trajectory of movement of the instrument axis 2 in an embodiment of a calibration according to the invention, e.g. in an initial rotation of the instrument at setup.

The lower diagram therein shows the angular encoder readings 31 as taken from the angular position encoder 5 of the axis 2, in this example the horizontal Hz-angle of a Total Station measured in radiant. The curve 31 shows an example of a trajectory that is used for deriving an accelerometer calibration according to the invent.

The middle diagram shows the rotational speed 32 corresponding to the encoder readings 31, which comprises an acceleration phase 32a, a section of constant rotational speed 32b e.g. 6 rad/sec, a deceleration phase 32c followed by a short stop 32d and an acceleration phase 32e in the opposite direction to a constant speed movement 32f with a rotational speed of -3 rad/sec, followed by a deceleration 32g to standstill.

In the top diagram, a corresponding rotational acceleration profile 33 of this trajectory is illustrated.

The rotational position 31 is derived by the angular encoder 5 (which typically provides a high resolution, e.g. in a range about arc-seconds), whereby also the rotational speed 32 can be derived with sufficient accuracy in order to establish a calibration of the accelerometer readings 18 to a range that is sufficient for the leveling requirements of the present application. The deriving of an angular speed 32 or acceleration 33 information from a time series of angular readings 31 by the encoder 5 can comprise a numerical filtering, e.g. a filtering in the frequency domain, a FIR-Filter, a spline filtering, a polynomial approximation, a deriving or estimating of parameters of a modeling of the underlying physical system, a smoothing, an estimator, etc.

Such a trajectory can e.g. be commanded to a drive unit for the axis 2 of the instrument for the accelerometer calibration.

In an example of an embodiment of a calibration according to the invention, the measurement values may only be considered in movement sections with a constant rotational speed 32b,32f (with Euler-force = 0), for example by ignoring measurement values during angular acceleration or deceleration. In each of those constant speed movement sections, the centrifugal acceleration is constant and its result is sensed by the accelerometer 9 and can also be calculated in knowledge of speed $\omega$ 32 and position 6 or distance r. This information, preferably from two or more different speeds 32 can be used to derive calibration parameters for the time corresponding acceleration measurement. In many embodiments, two different rotational speeds and/or rotational directions should in general be sufficient to establish a calibration of reasonable accuracy according to the invention, but also embodiments with more than two different rotational speeds and/or directions can be established for the calibrating of the accelerometer, whereby also the calibration accuracy can be improved, e.g. in view of averaging residual errors.

For some accelerometers, it might be acceptable to consider the Sensitivity Matrix as constant (e.g. known or pre-calibrated) and the present invention can only re-estimate the bias in a regular calibration in the field. In such case, a calibrating with only one (preferably constant) rotational speed can be sufficient to calibrate the bias only. Obviously, a rotational speed in this senses is unequal zero, preferably wherein the rotational speed and the position are configured to be coordinated with respect to each other, in particular in such a way that thereof resulting accelerations during the rotating are adapted to a measurement range of the accelerometer, preferably in such a way that a numerical solution for the calibration parameters according to the invention is significant.

In principle, this approach is not limited to constant speed phases, but in view of simplicity, accuracy and/or robustness, considering at least two constant speed phases can be a preferred embodiment of a tilt measurement calibration according to the invention in a surveying instrument. In case of considering non-constant speed phases as well, in addition to the centrifugal acceleration, also the Euler-acceleration has to be taken into account in the calibration considerations, which is in proportion to the angular acceleration of the movement trajectory. For example, in phases of constant rotational acceleration, the Euler acceleration will be constant. Being the second time derivative of the measured angle, care maybe some specific measures have to be taken to avoid noise and glitches in the deriving of the value of the angular acceleration from the positional encoder 5, which could degrade the calibration results. Besides, constant acceleration of reasonable magnitude can only be established over a short time in comparison to constant speed. Still, upon carefully considering this aspect as well, there can be embodiments of the present invention, in which fully dynamic trajectories, even of random shape can be used to establish a calibration of the accelerometer according to the present invention. Such could e.g. also enable to establish a calibration when the axis 2 is moved by hand and not only by a motor which allows constant speed movements, or e.g. enable a calibration or recalibration during random dynamic movement trajectories during a measurement process, (without the need to enforce constant speed phases of the movements during measurements - which would be another option for a calibration during measurement). Since the Euler-acceleration is in different direction than the centrifugal one, it can also bring additional advantages in the calibration parameter calculations, e.g. as the accelerations are evaluated in two (with gravity even three) directions.

**Fig. 7** shows measured acceleration sensor values 18 for two different speeds of rotation in an example of a field calibration setup according to the present invention. In this example, the measured accelerations 39 are shown, which are sampled from a MEMS-accelerometer 9 in theodolite-like instrument that is set up and rotated around its vertical HZ axis. At the abscissa, the corresponding angular positions 38 of the HZ axis 2 are shown, which are sampled from the rotational position encoder 5 of the HZ axis, which is the same encoder also used for taking measurements by the instrument. From a commanded trajectory of moving for the axis by an electrical drive unit of the Instrument, there are two movement phases shown, each with a constant rotating speed in each of the curve pairs 34/35 and 36/37.

Specifically, the figure shows simulated data of one axis with a moving at a constant rotational rates of 360°/s in the upper, longer lines 34 and 35, as well as with a speed of 90°/s in the lower, shorter lines 36 and 37. The dashed lines 35 and 37 are simulated errorless measurements, just affected by gravity and centrifugal force from the rotating. The solid lines 34 and 36 describe the measurement simulation with typical errors of bias, scale factor, rotation, shear, and noise added. In this example, the acceleration Sensor position is 4cm from the rotation axis and a tilt of the rotation axis is 14.8°.

The noisy lines 34 and 36 represent the raw, uncalibrated acceleration sensor measurement values for each rotational speed, compared to the respectively corresponding calibration result according to the present invention for those rotational speeds as represented by the clean lines 35 and 37.

An Offset can therein be defined according to the above described linear model by:

$$Offset = S\big(\omega \times (\omega \times r)\big) + b,$$

with the symbols as described above, and this offset in-between lines 34/35 resp. 36/37 is also clearly visible. Improvements by a calibration of a sensitivity matrix according to the invention is therein not that clearly visible, but still present. In some embodiments it can be sufficient to establish a calibration of the bias only to derive an adequate leveling as demanded for the instruments application, in particular when the sensitivity of the accelerometer tends to drift far less than the bias - as it is the case for some embodiments of accelerometers. The parameters of the sensitivity matrix of the accelerometer not as often as the bias and/or not all of the parameters of the matrix. For example, in some embodiments at least a subset of the matrix S is derived in a one time or in a periodical factory-calibration, and S is then considered to be fixed - and only the bias b is calibrated at each leveling according to the invention. In another embodiment, only the bias b and e.g. the diagonal elements of the matrix S are calibrated in the field when the leveling reference is to be established.

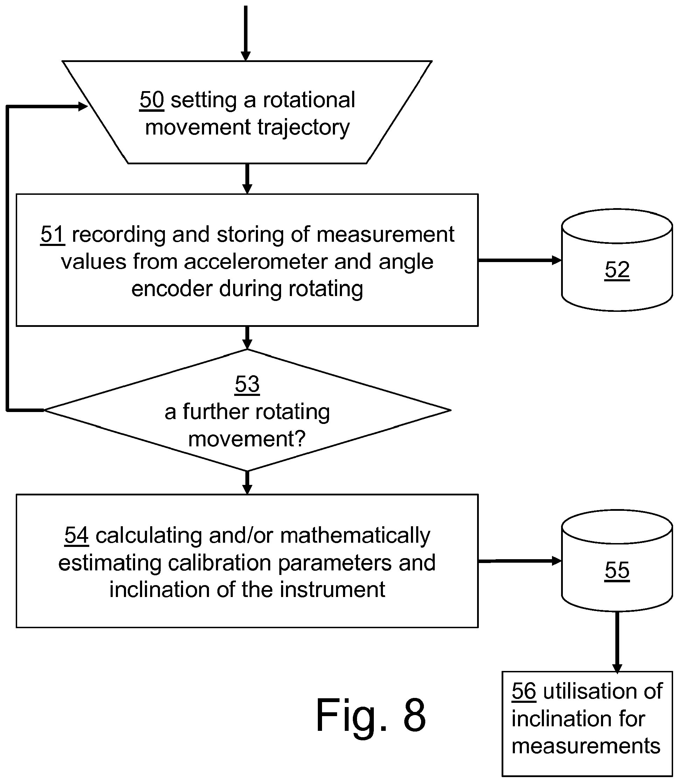

An example of an embodiment of a tilt measurement calibration according to the present invention is shown in Fig. 8. In this example two different speeds of rotation of the instrument are used, which is not limiting. Such a field-calibration can comprise:

- Rotating the instrument axis 2 with an acceleration sensor 9 at a known position 6 from the rotation axis 2 at a first angular speed ω1 - as symbolized in Box 50 by setting a rotating movement trajectory.
- First acquiring of measurements from the acceleration sensor 9 and from an angle encoder 5 at the instrument axis 2, preferably over several rotations, which acquiring is preferably synchronized - as symbolized in Box 51 by recording and storing of measurement values from accelerometer and angle encoder during rotating and Box 52 symbolizing a storage memory.
- rotating the instrument axis 2 at least one second angular speed ω2 - as symbolizes in Box 53 by a further rotating movement, which repeats Box 50 and 51 e.g. with at least a:

  - second acquiring of measurements from the acceleration sensor 9 and from an angle encoder 5 at the instrument axis 2, preferably over several rotations, which acquiring is preferably synchronized - as symbolized by the loop-arrow.
  - Deriving calibration parameters, in particular a bias-parameter and at least a subset of a sensitivity matrix-parameter of the acceleration sensor 9 based on the acquired measurements, in particular comprising a mathematical estimation calculation - as symbolized in Box 54 by calculating and/or mathematically estimating calibration parameters and inclination of the instrument 1 and in Box 55 symbolizing a storage memory for providing and/or storing the derived values for further usage.
  - Utilizing the derived tilt values for the measurements by the surveying instrument - as symbolized in Box 56 by utilization of inclination for measurements.

When the initial tilt is derived according to the invention, the instrument can be considered to be stationary as the calibration parameters for the accelerometers can be subject to drift and not long time stable. In embodiments, the calibration of the accelerometer can also be repeated, either in dedicated tilt calibration or tilt measurement moves of the instrument, and/or during appropriate moves during usage of the instrument (like a target search move, an appropriate measurement target aiming move, etc. etc.)

## Claims

1. A method for determining a calibrated leveling (23) of a surveying instrument (1) with an accelerometer (9), in particular of a theodolite or a total-station or a laser-scanner or a rotating laser or a laser tracker, the method comprising:

   - a moving (12) of the accelerometer (9) around a rotation axis (2) of the instrument (1), wherein the accelerometer (9)
   is arranged at a known position (6) with respect to the rotation axis (2), and during the moving (12),
   - acquiring of a movement profile (31) of the moving (12) by a rotational position encoder (5) for the rotation axis (2), and
   - sensing of an acceleration (18,19) due to dynamics of the moving (12) by the accelerometer (9) as accelerometer readings (18),
   and thereof,
   - deriving at least one calibration parameter (21,22) for the accelerometer (9) based on the movement profile (31), the corresponding accelerometer readings (18) and the known position (6) and
   - providing the calibrated leveling (23) to the surveying instrument (1) by applying the at least one calibration parameter (21,22) to the accelerometer readings (18), in particular wherein the calibrated leveling (23) is thereafter considered fixed by the instrument (1).

2. The method according to claim 1, **characterized in that,** the accelerometer (9) is a MEMS accelerometer and the deriving of the at least one calibration parameter (21,22) is done based on a model of the accelerometer (9).

3. The method according to claim 2, **characterized in that,** the deriving of the at least one calibration parameter (21,22) is done by calculating a mathematical or statistical estimator or a least square solution for the calibration parameter (21,22) in the model.

4. The method according to at least one of claims 2 to 3, **characterized in that,** the calibration parameter (21,22) is comprising a bias offset (22) of the accelerometer readings.

5. The method according to at least one of claims 1 to 4, **characterized in that,** the calibration parameter (21,22) is comprising a sensitivity matrix (21) of the accelerometer readings.

6. The method according to at least one of claims 1 to 5, **characterized in that,** the calibration parameter is comprising a time delay offset (24) of the accelerometer readings with respect to the movement profile.

7. The method according to at least one of claims 1 to 6, **characterized in that,** the movement profile (31) comprises at least one portion (32b,32f) of constant rotational speed movement, preferably at least two portions (32b,32f) of rotational movements of different constant angular speeds, based on which the calibration parameter (21,22) is derived,
   in particular with an evaluating of a centrifugal acceleration during those portions (32b,32f) in the deriving of the at least one calibration parameter (21,22).

8. The method according to at least one of claims 1 to 7, **characterized in that,** the movement profile (31) comprises at least one angular acceleration portion (32a,32c,32e,32g) of the moving, based on which the calibration parameter (21,22) is derived,
   in particular with an evaluating of an Euler-acceleration during this portion (32a,32c,32e,32g) in the deriving of the at least one calibration parameter (21,22).

9. The method according to at least one of claims 1 to 8, **characterized in that,** the moving (12) is done with a commanding of a desired movement profile (31) to a motorized drive mechanism (8) for rotating the rotational axis (2) of the instrument (1).

10. The method according to at least one of claims 1 to 9, **characterized in that,** the acquiring of the movement profile (31) and the sensing of an acceleration (18,19) is synchronized in time.

11. The method according to at least one of claims 1 to 10, **characterized in that,** the deriving of the at least one calibration parameter (21,22) based on the movement profile (31)

is comprising a deriving of an angular velocity (32) as a time derivative of angular orientation values from the rotational position encoder (5),
and/or
is comprising a deriving of an angular acceleration (33) as a second time derivative of angular orientation values from the rotational position encoder (5).

12. A geodetic surveying instrument (1), configured to direct a measurement light beam into a desired measurement direction (4) in space, in particular a theodolite, total-station, rotating laser, layout-tool, or laser-scanner, comprising

- at least one rotation axis (2) which is for providing a positioning of the measurement direction (4) of the geodetic surveying instrument (1), in particular wherein the instrument comprises a motorized drive mechanism (8) for rotating around the rotation axis (2) which is preferably configured to be commanded to follow a desired calibration trajectory, in particular wherein the rotation axis (2) is a substantial vertical axis of the instrument,
- a rotational position encoder (5) configured for deriving a rotational direction value (31) around the rotation axis (2) as a measurement value of the measurement direction (4) of the geodetic surveying instrument (1) and configured to derive a movement profile (31) of a moving (12) around the rotation axis (2), and
- a tilt sensor for deriving a leveling, wherein the tilt sensor comprises an accelerometer (9), in particular a MEMS-accelerometer, that is arranged at a known position (6) with a distance greater than zero from the movement axis (2) and that is configured for sensing of an acceleration due to dynamics of the moving (12) as accelerometer readings (18), and wherein und the surveying instrument (1) further comprises a calibration unit (7) configured to derive at least one calibration parameter for the accelerometer (9) based on the movement profile (31), the corresponding accelerometer readings (18) and the known position (6) and providing thereby calibrated accelerometer readings as a calibrated leveling reference, in particular as reference for the measurement direction (4).

13. The geodetic surveying instrument (1) according to claim 12, **characterized in that,** the at least one calibration parameter (21,22) comprise at least a bias offset (22) for the accelerometer readings and in particular also a scaling factor (21) for the accelerometer readings.

14. The geodetic surveying instrument (1) according to at least one of claims 12 to 13, **characterized in that,** the calibration unit (7) is configured to derive an angular velocity (32) as a time derivative of the rotational direction values (31) from the rotational position encoder (5) and thereof a centrifugal acceleration (18) at the known position (6) of the accelerometer (9) is calculated as a known acceleration value for the calibrating of the accelerometer (9) when rotating with the angular velocity (32),
and/or
the calibration unit (7) is configured to derive an angular acceleration (33) as a second time derivative of the rotational direction values (31) from the rotational position encoder (5) and thereof an Euler acceleration (19) at the known position (6) is calculated as a known acceleration value for the calibrating of the accelerometer (9) when rotating with the angular acceleration (33).

15. The geodetic surveying instrument (1) according to at least one of claims 12 to 14, **characterized in that**,

the trajectory is commanded by the calibration unit (7) and configured to comprise at least one constant rotation speed phase (32b,32f), during which the acceleration readings and the angular orientation values (31) are derived for the calibration, preferably a first constant rotation speed phase (32b) at a first rotation speed and a second constant rotation speed phase (32f) at a different, second rotation speed at which centrifugal accelerations are derived for the calibrating by the accelerometer and by calculation,
and/or
the trajectory is commanded by the calibration unit (7) and configured to comprise a rotational acceleration phase (32a,32c,32e,32g), during which a tangential Euler-acceleration is derived for the calibrating by the accelerometer and by calculation.

**Patentansprüche**

1. Verfahren zum Bestimmen einer kalibrierten Nivellierung (23) eines Vermessungsinstruments (1) mit einem Beschleunigungsmesser (9), insbesondere eines Theodoliten oder eines Tachymeters oder eines Laserscanners oder eines Rotationslasers oder eines Lasertrackers,

wobei das Verfahren umfasst:

- ein Bewegen (12) des Beschleunigungsmessers (9) um eine Rotationsachse (2) des Instruments (1), wobei der Beschleunigungsmesser (9) an einer bekannten Position (6) in Bezug auf die Rotationsachse (2) angeordnet ist,
und während des Bewegens (12),
- Erfassen eines Bewegungsprofils (31) des Bewegens (12) durch einen Rotationspositionsgeber (5) für die Rotationsachse (2), und
- Aufnehmen einer Beschleunigung (18, 19) aufgrund einer Dynamik des Bewegens (12) durch den Beschleunigungsmesser (9) als Beschleunigungsmesserwerte (18), und davon,
- Ableiten mindestens eines Kalibrierungsparameters (21, 22) für den Beschleunigungsmesser (9) auf Grundlage des Bewegungsprofils (31), der entsprechenden Beschleunigungsmesserwerte (18) und der bekannten Position (6) und
- Bereitstellen der kalibrierten Nivellierung (23) an das Vermessungsinstrument (1) durch Anwenden des mindestens einen Kalibrierungsparameters (21, 22) auf die Beschleunigungsmesserwerte (18),

insbesondere wobei die kalibrierte Nivellierung (23) danach durch das Instrument (1) als fest angesehen wird.

2. Verfahren nach Anspruch 1, **dadurch gekennzeichnet, dass** der Beschleunigungsmesser (9) ein MEMS-Beschleunigungsmesser ist und das Ableiten des mindestens einen Kalibrierungsparameters (21, 22) auf Grundlage eines Modells des Beschleunigungsmessers (9) erfolgt.

3. Verfahren nach Anspruch 2, **dadurch gekennzeichnet, dass** das Ableiten des mindestens einen Kalibrierungsparameters (21, 22) durch Berechnen einer mathematischen oder statistischen Schätzfunktion oder einer Lösung der kleinsten Quadrate für den Kalibrierungsparameter (21, 22) in dem Modell erfolgt.

4. Verfahren nach mindestens einem der Ansprüche 2 bis 3, **dadurch gekennzeichnet, dass** der Kalibrierungsparameter (21, 22) einen Bias-Offset (22) der Beschleunigungsmesserwerte umfasst.

5. Verfahren nach mindestens einem der Ansprüche 1 bis 4, **dadurch gekennzeichnet, dass** der Kalibrierungsparameter (21, 22) eine Empfindlichkeitsmatrix (21) der Beschleunigungsmesserwerte umfasst.

6. Verfahren nach mindestens einem der Ansprüche 1 bis 5, **dadurch gekennzeichnet, dass** der Kalibrierungsparameter (21, 22) einen Zeitverzögerungsversatz (24) der Beschleunigungsmesserwerte in Bezug auf das Bewegungsprofil umfasst.

7. Verfahren nach mindestens einem der Ansprüche 1 bis 6, **dadurch gekennzeichnet, dass** das Bewegungsprofil (31) mindestens einen Abschnitt (32b, 32f) mit einer Bewegung mit konstanter Rotationsgeschwindigkeit, bevorzugt mindestens zwei Abschnitte (32b, 32f) mit Rotationsbewegungen mit unterschiedlichen konstanten Winkelgeschwindigkeiten, umfasst, auf dessen/deren Grundlage der Kalibrierungsparameter (21, 22) abgeleitet wird, insbesondere mit einem Beurteilen einer Zentrifugalbeschleunigung während dieser Abschnitte (32, 32f) beim Ableiten des mindestens einen Kalibrierungsparameters (21, 22).

8. Verfahren nach mindestens einem der Ansprüche 1 bis 7, **dadurch gekennzeichnet, dass** das Bewegungsprofil (31) mindestens einen Winkelbeschleunigungsabschnitt (32a, 32c, 32e, 32g) des Bewegens umfasst, auf Grundlage dessen der Kalibrierungsparameter (21, 22) abgeleitet wird, insbesondere mit einem Beurteilen einer Euler-Beschleunigung während dieses Abschnitts (32a, 32c, 32e, 32g) beim Ableiten des mindestens einen Kalibrierungsparameters (21, 22).

9. Verfahren nach mindestens einem der Ansprüche 1 bis 8, **dadurch gekennzeichnet, dass** das Bewegen (12) mit einem Befehlen eines Soll-Bewegungsprofils (31) an einen motorbetriebenen Antriebsmechanismus (8) zum Rotieren der Rotationsachse (2) des Instruments (1) erfolgt.

10. Verfahren nach mindestens einem der Ansprüche 1 bis 9, **dadurch gekennzeichnet, dass** das Erfassen des Bewegungsprofils (31) und das Aufnehmen einer Beschleunigung (18, 19) zeitlich synchronisiert sind.

11. Verfahren nach mindestens einem der Ansprüche 1 bis 10, **dadurch gekennzeichnet, dass** das Ableiten des mindestens einen Kalibrierungsparameters (21, 22) auf Grundlage des Bewegungsprofils (31)

> ein Ableiten einer Winkelgeschwindigkeit (32) als eine Zeitableitung von Winkelausrichtungswerten von dem Rotationspositionsgeber (5) umfasst,
> und/oder
> ein Ableiten einer Winkelbeschleunigung (33) als eine zweite Zeitableitung von Winkelausrichtungswerten von dem Rotationspositionsgeber (5) umfasst.

12. Geodätisches Vermessungsinstrument (1), das dazu ausgelegt ist, einen Messlichtstrahl in eine gewünschte Messrichtung (4) im Raum zu richten, insbesondere ein Theodolit, Tachymeter, Rotationslaser, Layout-Werkzeug oder Laserscanner,

> umfassend

> - mindestens eine Rotationsachse (2), die zum Bereitstellen einer Positionierung der Messrichtung (4) des geodätischen Vermessungsinstruments (1) dient,

>> insbesondere wobei das Instrument einen motobetriebenen Antriebsmechanismus (8) zum Rotieren um die Rotationsachse (2) umfasst, der bevorzugt dazu ausgelegt ist, dazu befohlen zu werden, einer Soll-Kalibrierungsbahn zu folgen,
>> insbesondere wobei die Rotationsachse (2) eine im Wesentlichen vertikale Achse des Instruments ist,

> - einen Rotationspositionsgeber (5), der zum Ableiten eines Rotationsrichtungswerts (31) um die Rotationsachse (2) als einen Messwert für die Messrichtung (4) des geodätischen Vermessungsinstruments abzuleiten, und der dazu ausgelegt ist, ein Bewegungsprofil (31) eines Bewegens (12) um die Rotationsachse (2) abzuleiten, und
> - einen Kippsensor zum Ableiten einer Nivellierung,

> wobei
> der Kippsensor einen Beschleunigungsmesser (9), insbesondere einen MEMS-Beschleunigungsmesser, umfasst, der an einer bekannten Position (6) mit einem Abstand größer als null von der Bewegungsachse (2) angeordnet ist und der zum Aufnehmen einer Beschleunigung aufgrund einer Dynamik des Bewegens (12) als Beschleunigungsmesserwerte (18) ausgelegt ist, und wobei das Vermessungsinstrument (1) ferner eine Kalibrierungseinheit (7) umfasst, die dazu ausgelegt ist, mindestens einen Kalibrierungsparameter für den Beschleunigungsmesser (9) auf Grundlage des Bewegungsprofils (31), der entsprechenden Beschleunigungsmesserwerte (18) und der bekannten Position (6) abzuleiten und dadurch kalibrierte Beschleunigungsmesserwerte als eine kalibrierte Nivellierungsreferenz, insbesondere als Referenz für die Messrichtung (4), bereitzustellen.

13. Geodätisches Vermessungsinstrument (1) nach Anspruch 12, **dadurch gekennzeichnet, dass** der mindestens eine Kalibrierungsparameter (21, 22) mindestens einen Bias-Offset (22) für die Beschleunigungsmesserwerte und insbesondere auch einen Skalierungsfaktor (21) für die Beschleunigungsmesserwerte umfasst.

14. Geodätisches Vermessungsinstrument (1) nach mindestens einem der Ansprüche 12 bis 13, **dadurch gekennzeichnet, dass** die Kalibrierungseinheit (7) dazu ausgelegt ist, eine Winkelgeschwindigkeit (32) als eine Zeitableitung der Winkelausrichtungswerte (31) von dem Rotationspositionsgeber (5) abzuleiten, und daraus eine Zentrifugalbeschleunigung (18) an der bekannten Position (6) des Beschleunigungsmessers (9) als ein bekannter Beschleunigungswert für das Kalibrieren des Beschleunigungsmesser (9) beim Drehen mit der Winkelgeschwindigkeit (32) berechnet wird,
und/oder

die Kalibrierungseinheit (7) dazu ausgelegt ist, eine Winkelbeschleunigung (33) als eine zweite Zeitableitung der Winkelausrichtungswerte (31) von dem Rotationspositionsgeber (5) abzuleiten, und daraus eine Euler-Beschleunigung (19) an der bekannten Position (6) als ein bekannter Beschleunigungswert für das Kalibrieren des Beschleunigungsmesser (9) beim Drehen mit der Winkelbeschleunigung (33) berechnet wird.

15. Geodätisches Vermessungsinstrument (1) nach mindestens einem der Ansprüche 12 bis 14, **dadurch gekennzeichnet, dass** die Bahn durch die Kalibrierungseinheit (7) befohlen wird und derart ausgelegt ist, dass sie mindestens eine Phase (32b, 32f) mit konstanter Rotationsgeschwindigkeit, während der die Beschleunigungswerte und die Winkelausrichtungswerte (31) zur Kalibrierung abgeleitet werden, bevorzugt eine erste Phase (32b) mit konstanter Rotationsgeschwindigkeit bei einer ersten Rotationsgeschwindigkeit und eine zweite Phase (32f) mit konstanter Rotationsgeschwindigkeit bei einer anderen, zweiten Rotationsgeschwindigkeit, bei der Zentrifugalbeschleunigungen für das Kalibrieren durch den Beschleunigungsesser und durch Berechnung abgeleitet werden, umfasst,
und/oder
die Bahn durch die Kalibrierungseinheit (7) befohlen wird und derart ausgelegt ist, dass sie eine Rotationsbeschleunigungsphase (32a, 32c, 32e, 32g) umfasst, während der eine tangentiale Euler-Beschleunigung für das Kalibrieren durch den Beschleunigungsmesser und durch Berechnung abgeleitet wird.

**Revendications**

1. Procédé de détermination d'un nivellement étalonné (23) d'un instrument d'arpentage (1) avec un accéléromètre (9), en particulier d'un théodolite ou d'une station totale ou d'un scanner au laser ou d'un laser rotatif ou d'un appareil de poursuite laser,

   le procédé comprenant :

   - un déplacement (12) de l'accéléromètre (9) autour d'un axe de rotation (2) de l'instrument (1), dans lequel l'accéléromètre (9) est agencé à une position connue (6) par rapport à l'axe de rotation (2),
   et pendant le déplacement (12),
   - l'acquisition d'un profil de déplacement (31) du déplacement (12) par un encodeur de position de rotation (5) pour l'axe de rotation (2), et
   - le captage d'une accélération (18, 19) due à la dynamique du déplacement (12) par l'accéléromètre (9) en tant que lectures d'accéléromètre (18),
   et à partir de cela,
   - la dérivation d'au moins un paramètre d'étalonnage (21, 22) pour l'accéléromètre (9) d'après le profil de déplacement (31), les lectures d'accéléromètre (18) correspondantes et la position connue (6) et
   - la fourniture du nivellement étalonné (23) à l'instrument d'arpentage (1) en appliquant l'au moins un paramètre d'étalonnage (21, 22) aux lectures d'accéléromètres (18),

   en particulier dans lequel
   le nivellement étalonné (23) est considéré ci-après comme étant fixe par l'instrument (1).

2. Procédé selon la revendication 1, **caractérisé en ce que**, l'accéléromètre (9) est un accéléromètre MEMS et la dérivation de l'au moins un paramètre d'étalonnage (21, 22) se fait d'après un modèle de l'accéléromètre (9).

3. Procédé selon la revendication 2, **caractérisé en ce que**, la dérivation de l'au moins un paramètre d'étalonnage (21, 22) se fait en calculant un estimateur mathématique ou statistique ou une solution des moindres carrés pour le paramètre d'étalonnage (21, 22) dans le modèle.

4. Procédé selon au moins l'une des revendications 2 et 3, **caractérisé en ce que**, le paramètre d'étalonnage (21, 22) comprend une compensation de biais (22) des lectures d'accéléromètre.

5. Procédé selon au moins l'une des revendications 1 à 4, **caractérisé en ce que**, le paramètre d'étalonnage (21, 22) comprend une matrice de sensibilité (21) des lectures d'accéléromètre.

6. Procédé selon au moins l'une des revendications 1 à 5, **caractérisé en ce que**, le paramètre d'étalonnage comprend une compensation de retard (24) temporel des lectures d'accéléromètre par rapport au profil de déplacement.

7. Procédé selon au moins l'une des revendications 1 à 6, **caractérisé en ce que**, le profil de déplacement (31) comprend au moins une portion (32b, 32f) de déplacement à vitesse de rotation constante, de préférence au moins deux portions (32b, 32f) de déplacements de rotation de vitesses angulaires constantes différentes, d'après lesquelles le paramètre d'étalonnage (21, 22) est dérivé, en particulier avec une évaluation d'une accélération centrifuge pendant ces portions (32b, 32f) dans la dérivation de l'au moins un paramètre d'étalonnage (21, 22).

8. Procédé selon au moins l'une des revendications 1 à 7, **caractérisé en ce que**, le profil de déplacement (31) comprend au moins une portion d'accélération angulaire (32a, 32c, 32e, 32g) du déplacement, d'après laquelle le paramètre d'étalonnage (21, 22) est dérivé, en particulier avec une évaluation d'une accélération Euler pendant cette portion (32a, 32c, 32e, 32g) dans la dérivation de l'au moins un paramètre d'étalonnage (21, 22).

9. Procédé selon au moins l'une des revendications 1 à 8, **caractérisé en ce que**, le déplacement (12) se fait avec un ordre d'un profil de déplacement (31) souhaité à un mécanisme d'entraînement motorisé (8) pour une rotation de l'axe de rotation (2) de l'instrument (1).

10. Procédé selon au moins l'une des revendications 1 à 9, **caractérisé en ce que**, l'acquisition du profil de déplacement (31) et le captage d'une accélération (18, 19) sont synchronisés dans le temps.

11. Procédé selon au moins l'une des revendications 1 à 10, **caractérisé en ce que**, la dérivation de l'au moins un paramètre d'étalonnage (21, 22) d'après le profil de déplacement (31)

comprend une dérivation d'une vitesse angulaire (32) en tant que dérivée temporelle de valeurs d'orientation angulaire à partir de l'encodeur de position de rotation (5), et/ou comprend une dérivation d'une accélération angulaire (33) en tant que seconde dérivée temporelle de valeurs d'orientation angulaire à partir de l'encodeur de position de rotation (5).

12. Instrument d'arpentage géodésique (1), configuré pour diriger un faisceau de lumière de mesure dans une direction de mesure (4) souhaitée dans l'espace, en particulier un théodolite, une station totale, un laser rotatif, un outil d'implantation, ou un scanner au laser, comprenant

■ au moins un axe de rotation (2) qui sert à fournir un positionnement de la direction de mesure (4) de l'instrument d'arpentage géodésique (1), en particulier dans lequel l'instrument comprend un mécanisme d'entraînement motorisé (8) pour une rotation autour de l'axe de rotation (2) qui est de préférence configuré pour recevoir un ordre afin de suivre une trajectoire d'étalonnage souhaitée, en particulier dans lequel l'axe de rotation (2) est un axe sensiblement vertical de l'instrument,
■ un encodeur de position de rotation (5) configuré pour dériver une valeur de direction de rotation (31) autour de l'axe de rotation (2) en tant que valeur de mesure de la direction de mesure (4) de l'instrument d'arpentage géodésique (1) et configuré pour dériver un profil de déplacement (31) d'un déplacement (12) autour de l'axe de rotation (2), et
■ un capteur d'inclinaison pour dériver un nivellement, dans lequel le capteur d'inclinaison comprend un accéléromètre (9), en particulier un accéléromètre MEMS, qui est agencé à une position connue (6) avec une distance supérieure à zéro par rapport à l'axe de déplacement (2) et qui est configuré pour capter une accélération due à une dynamique du déplacement (12) en tant que lectures d'accéléromètre (18), et dans lequel l'instrument d'arpentage (1) comprend en outre une unité d'étalonnage (7) configurée pour dériver au moins un paramètre d'étalonnage pour l'accéléromètre (9) d'après le profil de déplacement (31), les lectures d'accéléromètre (18) correspondantes et la position connue (6) et fournissant ainsi des lectures d'accéléromètre étalonnées en tant que référence de nivellement étalonné, en particulier en tant que référence pour la direction de mesure (4).

13. Instrument d'arpentage géodésique (1) selon la revendication 12, **caractérisé en ce que**, l'au moins un paramètre d'étalonnage (21, 22) comprend au moins une compensation de biais (22) pour les lectures d'accéléromètre et en particulier également un facteur d'échelle (21) pour les lectures d'accéléromètre.

14. Instrument d'arpentage géodésique (1) selon au moins l'une des revendications 12 et 13, **caractérisé en ce que**, l'unité d'étalonnage (7) est configurée pour dériver une vitesse angulaire (32) en tant que dérivée temporelle des valeurs de direction de rotation (31) à partir de l'encodeur de position de rotation (5) et à partir de cela une accélération centrifuge (18) à la position connue (6) de l'accélération (9) est calculée en tant que valeur d'accélération connue pour l'étalonnage de l'accéléromètre (9) lors d'une rotation avec la vitesse angulaire (32), et/ou

l'unité d'étalonnage (7) est configurée pour dériver une accélération angulaire (33) en tant que seconde dérivée temporelle des valeurs de direction de rotation (31) à partir de l'encodeur de position de rotation (5) et à partir de cela une accélération Euler (19) à la position connue (6) est calculée en tant que valeur d'accélération connue pour l'étalonnage de l'accéléromètre (9) lors d'une rotation avec l'accélération angulaire (33).

**15.** Instrument d'arpentage géodésique (1) selon au moins l'une des revendications 12 à 14, **caractérisé en ce que**, la trajectoire est ordonnée par l'unité d'étalonnage (7) et configurée pour comprendre au moins une phase de vitesse de rotation constante (32b, 32f), pendant laquelle les lectures d'accélération et les valeurs d'orientation angulaire (31) sont dérivées pour l'étalonnage, de préférence une première phase de vitesse de rotation constante (32b) à une première vitesse de rotation et une seconde phase de vitesse de rotation constante (32f) à une seconde vitesse de rotation différente, auxquelles des accélérations centrifuges sont dérivées pour l'étalonnage par l'accéléromètre et par calcul, et/ou

la trajectoire est ordonnée par l'unité d'étalonnage (7) et configurée pour comprendre une phase d'accélération de rotation (32a, 32c, 32e, 32g), pendant laquelle une accélération Euler tangentielle est dérivée pour l'étalonnage par l'accéléromètre et par calcul.

# Fig. 1a

# Fig. 1b

# Fig. 2

Fig. 3

Fig. 4

Fig. 5

Fig. 6

Fig. 7

**50** setting a rotational movement trajectory

**51** recording and storing of measurement values from accelerometer and angle encoder during rotating

**52**

**53** a further rotating movement?

**54** calculating and/or mathematically estimating calibration parameters and inclination of the instrument

**55**

**56** utilisation of inclination for measurements

# Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1757956 A
- JP 4843128 B
- EP 1311873 A
- EP 1450128 A
- EP 1882959 A
- EP 1043602 A
- WO 2006063739 A
- US 6873407 B
- CN 201892533
- US 2011080477 A
- EP 1081459 A
- US 2012127455 A
- US 8365424 B
- WO 2012033892 A
- WO 2007079600 A
- WO 2010148525 A
- DE 202006005643 U1
- US 2009147319 A
- US 20140226145 A
- US 5973788 A
- EP 0440833 A
- WO 2011064317 A
- EP 3136049 A
- US 9194698 B